# EUROPÄISCHE PATENTSCHRIFT

(11) **EP 3 339 853 B1**
(45) Veröffentlichungstag und Bekanntmachung des Hinweises auf die Patenterteilung: **04.09.2019**
(21) Anmeldenummer: 16206092.5
(22) Anmeldetag: 22.12.2016
(51) Int. Cl.: G01N 29/04, F16C 41/00, G01M 13/04, G01N 29/22, G01N 29/26, G01N 29/30, G01N 29/44

(54) **VERFAHREN ZUR AKUSTISCHEN UNTERSUCHUNG DER LAUFBAHN EINES GROSSWÄLZLAGERS**
METHOD FOR ACOUSTICALLY EXAMINING A PATH OF TRAVEL OF A MAIN BODY OF A LARGE SCALE ROLLER BEARING
PROCÉDÉ D'ANALYSE ACOUSTIQUE DE LA TRAJECTOIRE D'UN GROS PALIER À ROULEMENT

(43) Veröffentlichungstag der Anmeldung: 27.06.2018
(73) Patentinhaber: Nordex Energy GmbH, 22419 Hamburg (DE)
(72) Erfinder: Hansen, Ocke-Philipp, 20259 Hamburg (DE); Börner, Stephan, 22885 Barsbüttel (DE); Fischer, Jan, 22081 Hamburg (DE)
(74) Vertreter: Hauck Patentanwaltspartnerschaft mbB

(56) Entgegenhaltungen:
- EP-A1- 0 228 731
- EP-A1- 2 743 522
- US-A- 5 971 619

## Beschreibung

Die vorliegende Erfindung betrifft ein Verfahren zur Untersuchung der Laufbahn eines Großwälzlagers. Ziel der Untersuchung ist, Beschädigungen, Abnutzungen, Risse und weitere Verschleißerscheinungen in dem Lager frühzeitig und zuverlässig zu erkennen.

Aus EP 0 529 354 B1 ist eine Vorrichtung zum Überwachen von Wälzlagern bekannt geworden. Die Vorrichtung ist vorgesehen zum Erkennen und Überwachen von Schäden an Laufbahnen oder angrenzenden Bereichen der Lagerringe, wobei ein oder mehrere Sensoren im Wälzkörperbauraum zwischen den Wälzkörpern angeordnet sind und Messsignale auf elektromagnetischem Wege an eine außen am Lagergehäuse angeordnete Antenne senden.

Aus US 8,181,528 B2 ist ein Verfahren und eine Vorrichtung zur Ultraschalluntersuchung eines Zahnrades in einem Getriebe bekannt geworden. Zur Untersuchung insbesondere von Rissen wird ein Ultraschallmesskopf auf die Außenfläche des Zahnrades gesetzt und entlang der Außenfläche um das Lager herum bewegt. Der Ultraschallmesskopf kann als ein *Phased-Array-*Messkopf ausgebildet sein, wobei die Messung aus mehreren Richtungen erfolgt.

Aus EP 0 413 119 A2 ist ein Großwälzlager bekannt geworden, bei dem in einem Ring eine Aufnahme für eine Ultraschallsonde ausgebildet ist und der andere Ring eine derart ausgebildete Koppelfläche aufweist, das eine einfache und sichere Ultraschallmessung angeordnet sind. Die umlaufende Koppelfläche reflektiert die eingetragene Ultraschallleistung.

In einem Beitrag von G. Splitt und G. Kaut "Phased Arrays - Eine zeitgemäße Lösung von Prüfaufgaben in der ZFT", aus der DGZFP Jahrestagung 2001, zerstörungsfreie Materialprüfung in Berlin, 21. bis 25. Mai 2001, wird für die Ultraschallprüfung die Verwendung von *Phased-Array-Messköpfen* diskutiert. Hierbei wird an Beispielen aus der Praxis gezeigt, welche Vorteile der Einsatz von *Phased Array-Messköpfen* besitzt, wobei eine rein elektronische Abtastung des Prüfstücks in einer Richtung als besonderer Vorzug gegenüber der bei der konventionellen Prüftechnik notwendigen Bewegung von Messkopf und Prüfstück dargestellt wird.

Bei der Auslegung von Großwälzlagern für Windenergieanlagen sind eine Vielzahl von unterschiedlichen Aspekten bei der Auslegung des Lagers zu berücksichtigen. Die konstruktive Einbringung von Koppelflächen in das Großwälzlager für die Verwendung einer Ultraschalluntersuchung ist hierbei in der Regel sehr aufwendig und mit einem beträchtlichen Aufwand verbunden.

Aus US 5,971,619 ist ein aus zwei einander gegenüberliegenden Ringen bestehendes Lager bekannt geworden, das eine einzelne Laufbahn in jedem Ring besitzt. Mindestens einer der Ringe trägt eine Ultraschallscaneinrichtung, die auf die Lauffläche der Bahn des gegenüberliegenden Ringes gerichtet ist.

Aus EP 2 743 522 A1 ist ein Großwälzlager bekannt geworden, bei dem mittels Schallwellen oder Wirbelstromverfahren ein Abstandswert zwischen den Lagerringen gemessen wird.

Aus EP 0 228 731 ist es bekannt, Lageranordnungen in großen Kränen mit Ultraschallmesseinrichtungen zu untersuchen. Der Scanvorgang des Rings erfolgt dabei während der Drehung.

Der Erfindung liegt die Aufgabe zugrunde, ein Verfahren zur Untersuchung einer Laufbahn eines Großwälzlagers in einer Windenergieanlage bereitzustellen, das mit einfachen Mitteln zuverlässige Untersuchungsergebnisse liefert.

Erfindungsgemäß wird die Aufgabe durch ein Verfahren mit den Merkmalen aus Anspruch 1 gelöst. Vorteilhafte Ausgestaltungen bilden den Gegenstand der Unteransprüche.

Das erfindungsgemäße Verfahren ist vorgesehen und bestimmt zur Untersuchung der Laufbahn eines Großwälzlagers in einer Windenergieanlage. Ein solches Großwälzlager in einer Windenergieanlage ist beispielsweise ein Lager für den Triebstrang oder ein Lager für die Azimutnachführung des Maschinenhauses. Das Großwälzlager besitzt ein Lagergehäuse, an dem eine Ultraschallmesseinrichtung montiert ist. Die Ultraschallmesseinrichtung ist auf eine Laufbahn des

Großwälzlagers gerichtet. Erfindungsgemäß ist vorgesehen, dass die Ultraschallmesseinrichtung zwei die Laufbahn begrenzenden Kanten erfasst und deren relative Lage und/oder Gestalt zueinander vermessen wird. Die relative Lage der beiden Kanten der Laufbahn zueinander drückt sich insbesondere im Abstand der Kanten zueinander aus. Der relative Abstand wird bevorzugt durch eine Auswertung der Abstände der beiden Kanten zum Messkopf ausgewertet. Neben dem Abstand der beiden Kanten relativ zueinander kann auch deren Gestalt ausgewertet werden, beispielsweise indem auf eine Verbreiterung oder eine sonstige Verformung der Kanten abgestellt wird. Auch hier kann ein Formvergleich der Kanten relativ zueinander dazu dienen, Abweichungen voneinander festzustellen und hierdurch Fehler frühzeitig zu erkennen.

In einer bevorzugten Weiterentwicklung des Verfahrens wird für die Messung ein *Phased-Array-*Messkopf verwendet. Die Verwendung eines solchen Messkopfs bietet den Vorteil, dass ohne eine Relativbewegung von Prüfstück zu Messkopf durch beide Kanten stets Referenzwerte vorliegen, die eine direkte Auswertung erlauben. Als besonders vorteilhaft hat sich hierbei auch herausgestellt, dass die Ultraschall-Messeinrichtung fest an dem Lagergehäuse montiert werden kann.

In einer weiteren bevorzugten Ausgestaltung wird jede der Kanten und eine Laufbahn zwischen den Kanten vermessen. Hierbei können unterschiedliche Fehlertypen diagnostiziert werden. Zu den Fehlern gehören beispielsweise eine Beschädigung der oberen oder der unteren Kante, ebenso wie eine Beschädigung der Laufbahn zwischen den Kanten. In der Regel kann je nach Aufbau und Lage zur Laufbahn auch eine Schmiermittelnut erfasst und ausgewertet werden. Vorteilhafterweise wird beispielsweise ein zunehmender Abstand zwischen den beiden Kanten als Beschädigung der Kanten erkannt. Auch eine Verbreiterung mindestens einer der Kanten kann als Fehler bekannt werden. Eine vorteilhafte Ausgestaltung der Erfindung wird nachfolgend an einem Ausführungsbeispiel näher beschrieben.

Es zeigen:
- Fig. 1a, b: eine schematische Querschnittszeichnung einer Kugellaufbahn mit drei Reflektionsstellen,
- Fig. 2: das Ergebnis einer Kontrollmessung für eine Referenzkante zur Schmiermittelnut unter 41° und
- Fig. 3: das Ergebnis einer Referenzmessung für die Darstellung einer Prüfkante zur Käfigführung unter 62°.

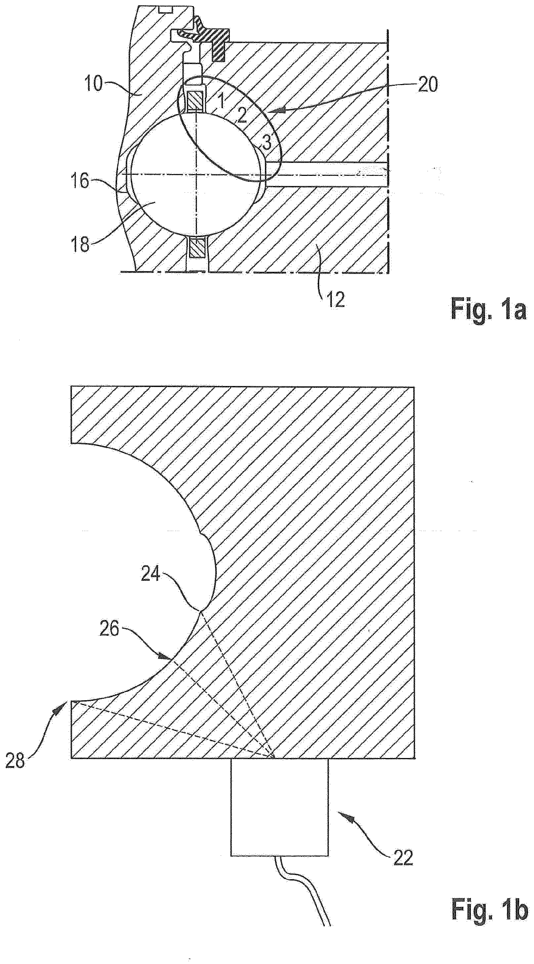

Figur 1a zeigt einen Querschnitt durch ein Kugellager mit einem äußeren Lagerring 10 und einem inneren Lagerring 12. Der innere Lagerring 12 besitzt eine zentrale Bohrung, von der aus Schmiermittel (nicht dargestellt) in eine Schmiermittelnut 16 eingebracht werden kann. Zwischen dem inneren Lagerring 12 und dem äußeren Lagerring 10 ist eine Kugel 18 als Wälzkörper vorgesehen. Bei Großwälzlagern sind verschiedene Formen und Bautypen von Wälzkörpern möglich. So können neben den Kugeln auch Rollen, Kegel und Tonnen, mit oder ohne Käfigführung, in dem Wälzlager eingesetzt werden.

Der in Fig. 1a dargestellte Bereich 20 bildet eine Lauffläche für die Kugel 18. Bei einem außen gesetzten Ultraschallmesskopf (nicht dargestellt) können an der Lauffläche 20 die mit 1, 2 und 3 gekennzeichneten Bereiche besonders untersucht werden. Hier ist mit 3 der Übergang der Kante zur Schmiermittelnut 16, mit 2 die Lauffläche und mit 1 die Kante zur Verbindung zwischen dem inneren Lagerring 12 und dem äußeren Lagerring 10 gekennzeichnet. Hier kann beispielsweise auch eine Käfigführung für die Kugel 18 eingesetzt sein.

Figur 1b zeigt einen Phased-Array-Messkopf 22, der auf eine Referenzkante 24 ausgerichtet ist. Die Referenzkante 24 liegt beispielsweise unter 41° und kann einen Referenzabstand zu den Abstandmessungen, der Kanten 28 und einem Bereich 26 der Lauffläche bilden.

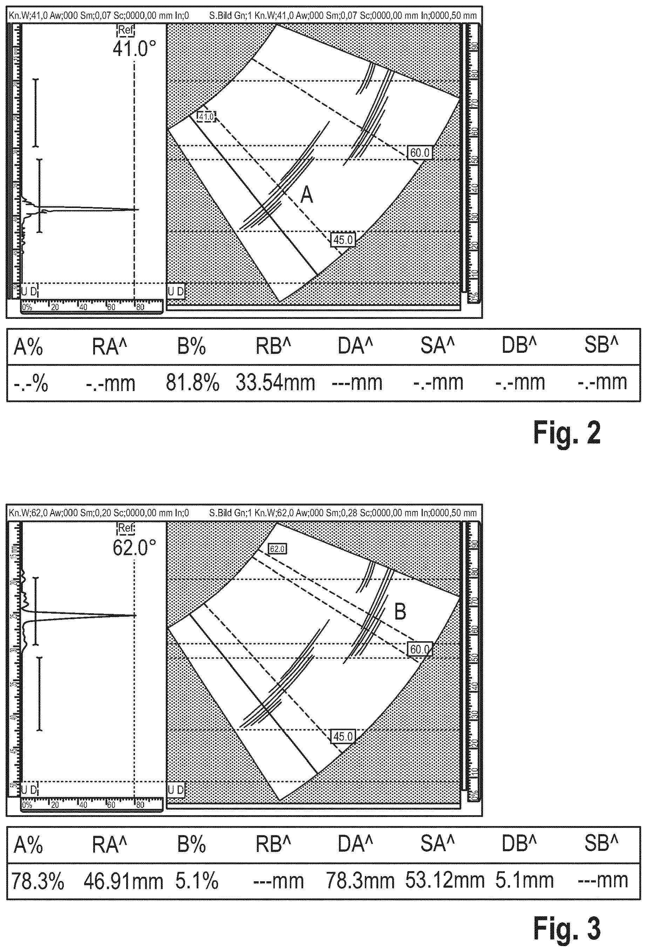

Figur 2 zeigt beispielhaft aufgenommene Kontrollmessungen bei der mit einem Winkel von 41° der reflektierte Ultraschall der Kante zur Schmiermittelnut dargestellt ist. In der mit A gekennzeichneten Darstellung ist zu erkennen, dass die Kante sich scharf konturiert abzeichnet.

Figur 3 zeigt die Messung einer Kante, die zu einer Käfigführung gehört unter 62°: Hier ist die Kante breiter als die Kante zur Schmiermittelnut dargestellt. Form und Ausdehnung der Kante B sprechen aber dafür, dass diese intakt ist.

### Bezugszeichenliste

- 10: äußerer Lagerring
- 12: innerer Lagerring
- 16: Schmiermittelnut
- 18: Kugel
- 20: Lauffläche
- 22: Phased-Array-Messkopf
- 24: Referenzkante
- 26: Kante
- 28: Kante

## Patentansprüche

1. Verfahren zur Untersuchung der Laufbahn (20) eines Großwälzlagers in einer Windenergieanlage, das ein Lagergehäuse aufweist, wobei die Laufbahn (20) zwei Kanten aufweist, wobei bei dem Verfahren mit einer an dem Lagergehäuse montierten Ultraschallmesseinrichtung (22) die Laufbahn (20) des Großwälzlagers vermessen wird, wobei die Ultraschallmesseinrichtung (22) die zwei Kanten (28) der Laufbahn (20) erfasst, **dadurch gekennzeichnet dass** von der Ultraschallmesseinrichtung (22) eine relative Lage und/oder Gestalt der zwei Kanten zueinander vermessen wird.

2. Verfahren nach Anspruch 1, **dadurch gekennzeichnet, dass** für die Ultraschallmesseinrichtung (22) ein Phased-Array-Messkopf verwendet wird.

3. Verfahren nach Anspruch 1 oder 2, **dadurch gekennzeichnet, dass** die Ultraschallmesseinrichtung (22) fest an dem Lagergehäuse montiert ist.

4. Verfahren nach einem der Ansprüche 1 bis 3, **dadurch gekennzeichnet, dass** jede der Kanten (28) und eine Lauffläche zwischen den Kanten (28) vermessen wird.

5. Verfahren nach einem der Ansprüche 1 bis 4, **dadurch gekennzeichnet, dass** ein zunehmender Abstand zwischen den beiden Kanten (28) als Beschädigung der Kante (28) erkannt wird.

6. Verfahren nach einem der Ansprüche 1 bis 5, **dadurch gekennzeichnet, dass** eine Verbreiterung mindestens einer der Kanten (28) als ein Fehler erkannt wird.

## Claims

1. Method for examining the raceway (20) of a large roller bearing in a wind turbine which has a bearing housing, the raceway (20) having two edges, in which method the raceway (20) of the large roller bearing is measured using an ultrasonic measuring device (22) mounted on the bearing housing, the ultrasonic measuring device (22) measuring the two edges (28) of the raceway (20), **characterized in that** the ultrasonic measuring device (22) measures a relative position and/or shape of the two edges with respect to one another.

2. Method according to claim 1, **characterized in that** a phased-array measuring head is used for the ultrasonic measuring device (22).

3. Method according to claim 1 or 2, **characterized in that** the ultrasonic measuring device (22) is fixedly mounted on the bearing housing.

4. Method according to any one of claims 1 to 3, **characterized in that** each of the edges (28) and a running surface between the edges (28) is measured.

5. Method according to any one of claims 1 to 4, **characterized in that** an increasing distance between the two edges (28) is detected as damage of the edge (28).

6. Method according to any one of claims 1 to 5, **characterized in that** a widening of at least one of the edges (28) is detected as a defect.

## Revendications

1. Procédé d'examen de la piste de roulement (20) d'un palier à roulement de grande taille dans une éolienne, qui présente un logement de palier, dans lequel la piste de roulement (20) comporte deux bords, sachant que la piste de roulement (20) du palier à roulement de grande taille est mesurée à l'aide d'un dispositif de mesure à ultrasons (22) lors du procédé, dans lequel le dispositif de mesure à ultrasons (22) détecte les deux bords (28) de la piste de roulement (20), **caractérisé en ce que** la position relative et/ou la forme des deux bords l'un par rapport à l'autre sont mesurées par le dispositif de mesure à ultrasons (22).

2. Procédé selon la revendication 1, **caractérisé en ce qu'**une sonde en réseau phasé (*phased array*) sert au dispositif de mesure à ultrasons (22).

3. Procédé selon la revendication 1 ou 2, **caractérisé en ce que** le dispositif de mesure à ultrasons (22) est monté fixement sur le logement de palier.

4. Procédé selon l'une des revendications 1 à 3, **caractérisé en ce que** chacun des bords (28) et une surface de roulement entre les bords (28) sont mesurés.

5. Procédé selon l'une des revendications 1 à 4, **caractérisé en ce qu'**un écart croissant entre les deux bords (28) est identifié comme étant une détérioration du bord (28).

6. Procédé selon l'une des revendications 1 à 5, **caractérisé en ce qu'**un élargissement d'au moins un des bords (28) est identifié comme étant une erreur.
